# EUROPEAN PATENT APPLICATION

(11) **EP 4 617 847 A1**
(43) Date of publication of application: **17.09.2025**
(21) Application number: 25162754.3
(22) Date of filing: 10.03.2025
(51) Int. Cl.: G06F 3/12

(54) **PRINT CONTROL PROGRAM, PRINT SYSTEM, AND PRINTED MATTER PRODUCTION METHOD**

(30) Priority: 11.03.2024 JP 2024036883
(71) Applicant: Seiko Epson Corporation, Tokyo 160-8801 (JP)
(72) Inventor: IKEDA, Yuki, Suwa-shi, 392-8502 (JP); OHASHI, Kazuki, Suwa-shi, 392-8502 (JP)
(74) Representative: Lewis Silkin LLP

(57) **Abstract**

A print control program according to one aspect of the present disclosure causes a computer to execute acquisition processing, first transmission processing, and second transmission processing. The acquisition processing acquires print data from a general-purpose printer driver 16. When the print data is acquired in the acquisition processing, control data is transmitted to the first printer in the first transmission processing. In the second transmission processing, the print data is transmitted to a management program for transmitting, in response to a control-data-based request from a second printer, the print data to the second printer to cause the second printer to perform printing.

## Description

The present application is based on, and claims priority from JP Application Serial Number 2024-036883, filed March 11, 2024, the disclosure of which is hereby incorporated by reference herein in its entirety.

### BACKGROUND

### 1. Technical Field

The present disclosure relates to a print control program, a print system, and a printed matter production method.

### 2. Related Art

JP-A-2022-097931 discloses a print system in which in a network in which a server and a terminal device storing print jobs are connected in a communicable way, when network information of the terminal device changes, the server can transmit a print instruction to the terminal device.

### SUMMARY

The print system disclosed in JP-A-2022-097931 executes printing using a printer vendor-specific driver in the terminal device instead of a general-purpose printer driver such as an operating system (OS) standard printer driver.

In an environment in which a general-purpose printer driver is installed in a terminal device, development of a technique for causing a printer other than a printer specified by the terminal device to execute printing is desired.

A non-transitory computer-readable storage medium stores a print control program according to one aspect of the present disclosure, and the print control program causes a computer to execute: acquisition processing of acquiring print data from a general-purpose printer driver; first transmission processing of transmitting control data to a first printer when the print data is acquired in the acquisition processing; and second transmission processing of transmitting the print data to a management program for transmitting the print data to a second printer in response to a control-data-based request from the second printer to cause the second printer to perform printing.

A print system according to one aspect of the present disclosure includes: a computer; a first printer; and a second printer, in which the computer includes a general-purpose printer driver, an acquisition processing unit configured to acquire print data from the general-purpose printer driver, a first transmission processing unit configured to transmit control data to the first printer when the print data is acquired by the acquisition processing unit, a management unit configured to transmit, in response to a control-data-based request from a second printer, the print data to the second printer to cause the second printer to perform printing, and a second transmission processing unit configured to transmit the print data acquired by the acquisition processing unit to the management unit.

A printed matter production method according to one aspect of the present disclosure includes: acquisition processing of acquiring, by a print control program, print data from a general-purpose printer driver; first transmission processing of transmitting, by the print control program, control data to a first printer; second transmission processing of transmitting, by the print control program, the print data to a management program; and print processing of transmitting, by the management program, the print data to a second printer in response to a control-data-based request from the second printer to cause the second printer to produce a printed matter.

### BRIEF DESCRIPTION OF THE DRAWINGS

FIG. 1 is a block diagram illustrating a configuration example of a print system according to an embodiment.
FIG. 2 is a schematic diagram schematically illustrating a flow of print processing in the print system of FIG. 1.
FIG. 3 is a sequence diagram illustrating an example of the print processing in the print system of FIG. 1.
FIG. 4 is a diagram illustrating an example of a user interface image displayed by a printer that performs printing in the print processing of FIG. 3.
FIG. 5 is a schematic diagram schematically illustrating a flow of print processing in a print system according to Comparative Example 2.
FIG. 6 is a diagram illustrating an example of a hardware configuration of a device.

### DESCRIPTION OF EMBODIMENTS

Hereinafter, an embodiment according to the present disclosure will be described with reference to the drawings. The drawings are merely an example illustrating the embodiment of the present disclosure. Not all components described in the embodiment of the present disclosure are essential components of the present disclosure.

### Embodiment

### Configuration of System

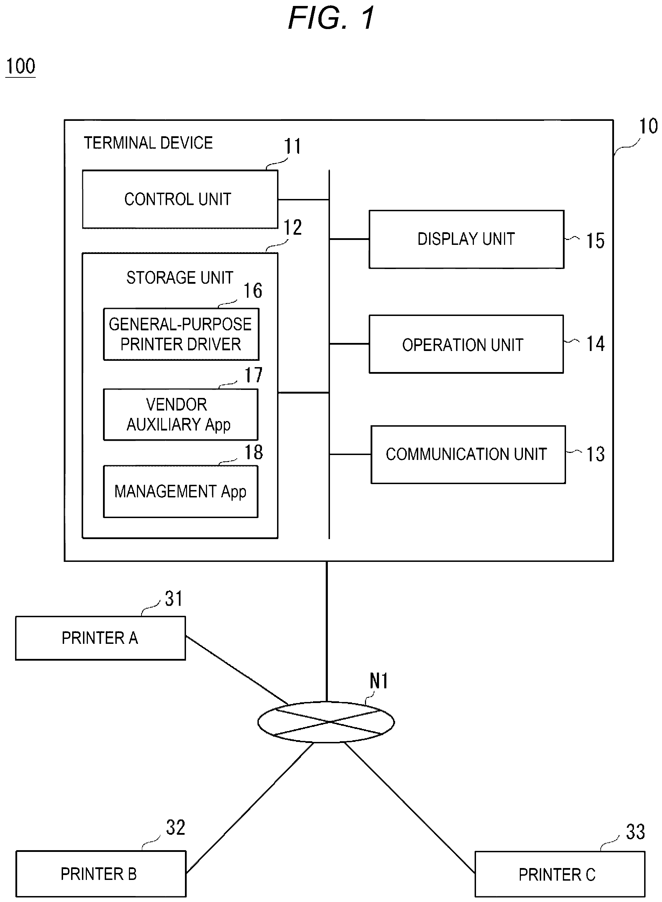

A configuration example of a print system according to an embodiment is described with reference to FIG. 1. FIG. 1 is a block diagram illustrating the configuration example of the print system according to the embodiment.

As illustrated in FIG. 1, a print system 100 according to the embodiment can include a terminal device 10, a printer A (31), a printer B (32), and a printer C (33).

The terminal device 10 is an information processing device having a communication function such as a personal computer (PC), a smartphone, or a tablet terminal and can be used by a user who desires printing. The terminal device 10 may be a portable information processing device or an installation type information processing device. The terminal device 10 can be connected to the printer A (31), the printer B (32), and the printer C (33) via a network N1.

All of the printer A (31), the printer B (32), and the printer C (33) are examples of a printer and can print print data on a medium when receiving the print data. Each of the printers produces a printed matter by performing printing in this way. For convenience, the description is made on an assumption that the print system 100 includes three printers as described above. However, a plurality of printers may be included. Each of the printers can also be referred to as a printing device or an image formation device. A printing method in each of the printers does not matter, and various printing methods such as an inkjet printing method or a laser printing method can be applied. The printers included in the print system 100 may have the same model or different models.

Each of the printers may be a device having a printing function and a communication function, or may be a multifunction device having other functions such as a scanner function, a copy function, and a facsimile transmission function.

In addition, each of the printers can have, as a user authentication function, a function of receiving an input of authentication target information such as a user ID and a password and performing user authentication by comparing the authentication target information with authentication information such as a user ID and a password stored in advance. To input the authentication target information, each of the printers can include, for example, an operation unit and a display unit. The operation unit can be implemented by, for example, any one or a plurality of a physical button and a touch panel mounted on the display unit. In a configuration in which the operation unit includes a touch panel, the display unit and the touch panel can be collectively referred to as an operation panel of the printer. The display unit is a part for displaying a user interface (UI) image for operating the printer and is implemented by a display device such as a liquid crystal display or an organic electroluminescence display.

In the following, an example in which the authentication target information is input by inputting the user ID and the password in this way is described. However, the input of the authentication target information can be executed, for example, by reading an integrated circuit (IC) card of a non-contact type or a contact type with an IC card reader for reading information on the IC card. In this case, the IC card reader may be provided in the printer, or may be connected to the printer. The authentication target information and the authentication information may be biometric information of the user, such as fingerprint information of the user. In this case, a device for reading the biometric information as the authentication target information may be provided or connected on a printer side.

The terminal device 10 can issue a print instruction to a printer selected by a user operation from printers registered and recognized as a printer that performs printing among the printer A (31), the printer B (32), and the printer C (33).

In the following, an example in which the printer A (31) among the printers is registered and recognized as a printer that performs printing in the terminal device 10 is described. In this example, a printer queue for the printer A (31) is registered in the terminal device 10. In this case, the terminal device 10 is in an environment in which the print instruction cannot be issued to the printer B (32) and the printer C (33) as long as the printer B (32) and the printer C (33) are not registered. In the following, the printer B (32) and the printer C (33) are all coupled to the printer A (31) via the network N1. In this example, the printer A (31) can function as a parent printer in the terminal device 10, and the printer B (32) and the printer C (33) can function as a child printer of the printer A (31).

Although not illustrated, the print system 100 can include a plurality of terminal devices similar to the terminal device 10. Which printer is a parent printer for the terminal device 10 depends on a system configuration of the print system 100. For example, the printer A (31) that functions as a parent printer in the terminal device 10 functions as a child printer in another terminal device, and the printer B (32) functions as a parent printer in another terminal device described above.

A configuration example of the terminal device 10 is described in detail below. Description of a configuration example of each of the printers is omitted.

### Configuration of Terminal Device 10

As illustrated in FIG. 1, the terminal device 10 can include a control unit 11, a storage unit 12, a communication unit 13, an operation unit 14, and a display unit 15.

The control unit 11 controls the entire terminal device 10. The control unit 11 can include, for example, an arithmetic processing device, a working memory, and a storage device that stores a control program, parameters, and the like. The arithmetic processing device described above can be a central processing unit (CPU), a graphics processing unit (GPU), or the like. The control unit 11 can also be implemented as a system on a chip (SoC). As can be seen from these examples, the control unit 11 can be configured to store the control program in an executable state. The control unit 11 may have a configuration in which a part of the control program is stored as a circuit configuration such as a field-programmable gate array (FPGA), or may be implemented as a dedicated circuit.

The control program described above can include a program for the arithmetic processing device to execute processing related to the printing in cooperation with the storage unit 12, the communication unit 13, the operation unit 14, and the display unit 15. The control program described above can include an OS. Since the OS is an OS mounted on the terminal device 10, a type of the OS depends on a model of the terminal device 10 or the like. The control program described above can include a Web browser in the OS or outside the OS. In the following, an example is described in which at least a part of the control program is stored in the storage unit 12 provided separately from the control unit 11, and the storage unit 12 may be a part of the storage device in the control unit 11. That is, the storage unit 12 can be grasped as a part of the control unit 11.

The storage unit 12 is, for example, a storage device implemented by a hard disk drive, a solid state drive, or another memory. The storage unit 12 stores, as a part of the control program, a general-purpose printer driver 16, a vendor auxiliary application program 17, and a management application program 18 to be described later in a state executable by the control unit 11. Hereinafter, the vendor auxiliary application program is abbreviated as a vendor auxiliary App, and the management application program is abbreviated as a management App. In addition, the storage unit 12 can store various types of data such as a print target file.

The communication unit 13 is a part for communicating wirelessly or wired with external devices such as the printers via the network N1 according to various mobile communication standards or predetermined communication standards such as the Wi-Fi (registered trademark, the same applies below) standard. The communication unit 13 can be implemented by one or a plurality of communication interfaces enabling these communications. The communication interface may be, for example, an antenna or a cable connector. The network N1 is usually a local area network (LAN).

The operation unit 14 is a part for receiving operations by the user of the terminal device 10 and can also be referred to as an operation reception unit. The operation unit 14 can be implemented by, for example, any one or a plurality of a physical button, a touch panel mounted on the display unit 15, a pointing device, and a keyboard. In a configuration in which the operation unit 14 includes a touch panel, the display unit 15 and the touch panel can be collectively referred to as an operation panel of the terminal device 10.

The display unit 15 is a part for displaying a UI image for operating the terminal device 10 and is implemented by a display device such as a liquid crystal display or an organic electroluminescence display. The display unit 15 can include a display and a drive circuit that drives the display.

The general-purpose printer driver 16 is described. The general-purpose printer driver 16 is an OS-standard printer driver provided in an OS included in the control program or attached to the OS. For example, the general-purpose printer driver 16 is a standard printer driver for the Windows (registered trademark, the same applies below) OS. For various types of printers, the general-purpose printer driver 16 can be a program capable of controlling the printers to perform printing. The general-purpose printer driver 16 can also be referred to as an OS general-purpose printing program or a general-purpose printing program.

The general-purpose printer driver 16 is a driver that uses a general-purpose protocol for a search for a printer and for the printing. For example, the general-purpose printer driver 16 uses mDNS/DNS-SD for the search for the printer and uses IPP for the printing in the printer. Here, DNS is an abbreviation for domain name system. mDNS is an abbreviation for multicast DNS. DNS-SD is an abbreviation for DNS service discovery. IPP is an abbreviation for internet printing protocol.

As can be seen from these examples, the general-purpose printer driver 16 can be, for example, an IPP class driver. IPP is an example of a standard protocol for controlling management and printing of the printer. The IPP acquires and controls printer information according to hypertext transfer protocol (HTTP) POST requests and responses. In the IPP, the printer can be set and a state of the printer can be acquired. Here, secure communication can be performed by using HTTP secure (HTTPS) instead of the HTTP.

The vendor auxiliary App 17 is described. The vendor auxiliary App 17 is an application program for assisting the general-purpose printer driver 16 and is used to expand functions of the general-purpose printer driver 16. Therefore, the general-purpose printer driver 16 can have a function of activating the vendor auxiliary App 17 and transmitting a print job to the vendor auxiliary App 17. The vendor auxiliary App 17 may be, for example, a print support application (PSA). One print job refers to instructions for a series of operations for printing one or a plurality of printed matters and includes the print data and print settings. When printing a plurality of printed matters, one print job refers to instructions of a series of operations for printing printed matters having the same printing content.

The vendor auxiliary App 17 can be a program for assisting the general-purpose printer driver 16 and causing a computer to execute print control suitable for performances of a target printer, that is, print control for supporting a unique function of the printer. Here, the computer refers to the terminal device 10 or the control unit 11. When acquiring the print job from the general-purpose printer driver 16, the vendor auxiliary App 17 can convert the print job such that printing using a unique function of a specified printer can be executed by the printer. The conversion of the print job may include conversion of the print data.

The vendor auxiliary App 17 is an application program provided by, for example, a vendor of the printer. The vendor auxiliary App 17 can be provided to the user of the terminal device 10 by being disclosed in, for example, an application store of an OS provider. Alternatively, the vendor auxiliary App 17 can be provided to the user by being included in the OS or attached to the OS.

The vendor auxiliary App 17 includes at least a print control program to be described later. That is, the print control program can also be implemented as, for example, a PSA. The print control program is a program for causing the computer to execute acquisition processing, first transmission processing, and second transmission processing to be described later. Here, the computer refers to the terminal device 10 or the control unit 11.

Schematically speaking, the print control program can be a program that works in conjunction with the management App 18 to enable printing on either the printer B (32) or the printer C (33) to which the print instruction cannot be directly issued from the terminal device 10.

The print control program described above may be configured to cause the computer to execute processing of accumulating the print data without executing printing. Hereinafter, this processing is referred to as accumulation processing. In the accumulation processing, the print data is accumulated such that the print data is managed by the management App 18 as to be described later.

The print control program described above can be configured to allow the user to make a setting as to whether to execute the accumulation processing. In this case, the acquisition processing, the first transmission processing, and the second transmission processing to be described later can be executed when a setting for accumulating the print data is made. On the other hand, when a setting for performing the printing without accumulating the print data is made, the print control program described above may cause the printer A (31) to execute the printing directly. Alternatively, the print control program described above may be configured to cause the computer to execute processing of automatically accumulating target print data when the print instruction is issued.

Alternatively, the print control program described above may be configured to cause the computer to execute processing of automatically accumulating the target print data only when the printer A (31) satisfies a predetermined condition when the print instruction is issued to the printer A (31) that performs printing. On the other hand, when the predetermined condition described above is not satisfied, the print control program described above may cause the computer to execute processing of causing the printer A (31) to execute the printing directly. Examples of the predetermined condition described above include a condition on a degree of congestion of the print processing in the printer A (31) to which the print instruction is issued, a condition on an error occurrence condition, a condition on a time zone when the print instruction is issued, and the like. The condition on the degree of congestion of the print processing may be a condition that the number of print jobs to be processed, the number of sheets, or the like falls below a threshold. The condition on the error occurrence condition may be, for example, a condition that an error requiring time to eliminate paper jam or the like does not occur.

In the accumulation processing as described above, in the printer that performs printing, the accumulated print data is specified, the print data is read, and the printing can be performed by the printer. The accumulation of the print data is performed in the management App 18 as to be described later. The printer can be, for example, the printer B (32) or the printer C (33) that functions as the child printer, and may be the printer A (31) that functions as the parent printer. For example, in the accumulation processing, user authentication processing is performed in the printer that performs printing, and when the user authentication processing is successful, the accumulated print data is specified, the print data is read, and the printing can be performed by the printer. Printing accompanied by such user authentication processing is hereinafter referred to as authentication printing.

In the authentication printing, the printer receives an operation related to user authentication from the user, performs user authentication based on the received operation related to the user authentication, and performs printing based on a result thereof. When the user authentication is successful, the printer that performs the user authentication prints a printed matter based on the print job desired by the user. By adopting such authentication printing, the print system 100 can prevent information printed on the printed matter from leaking to the other person because the printing of the printed matter based on the print job desired by the user is executed by the printer provided at a location away from the user. Since the printing of the printed matter based on the print job desired by the user can be executed by any printer, the print system 100 is highly convenient for the user.

Hereinafter, the acquisition processing, the first transmission processing, and the second transmission processing in the print control program described above are described. The acquisition processing acquires the print data from the general-purpose printer driver 16. Then, when the print data is acquired in the acquisition processing, the first transmission processing transmits control data to the first printer. The control data can be transmitted to the first printer as a command. The control data can include print data specifying information that is information used for specifying the print data, and computer specifying information. The print data specifying information may be information for specifying the print job. Here, the computer also refers to the terminal device 10 or the control unit 11. The computer specifying information is used to specify a computer of an accumulation destination of the print data. In the example of FIG. 1, the computer specifying information is used to specify the terminal device 10.

Here, the first printer is a printer that functions as a parent printer and refers to the printer A (31). The control data is data corresponding to the print data and can include the computer specifying information. Based on the computer specifying information, it is possible to notify the printer B (32) and the printer C (33), which function as a child printer that perform the authentication printing, of an acquisition source of the print data, and to acquire the print data from the printer B (32) and the printer C (33). Of course, even in the printer A (31) that functions as a parent printer as described above, since the acquisition source of the print data can be specified, the authentication printing can be performed similarly, and in this case, the authentication printing is executed after a timing at which the accumulation processing is instructed.

The second transmission processing transmits the print data acquired in the acquisition processing to a management program. Here, the second transmission processing may transmit the control data to the management program together with the print data. In this case, the print data and the control data can be transmitted to the management program as separate commands associated with each other or as a one combined command. This transmission is executed to manage the print data, or the print data and the control data by the management program and is executed via inter-process communication. The management program is indicated by the management App 18 in FIG. 1. As can be seen from the first transmission processing and the second transmission processing, the print control program described above is a program for communicating with the printer and the management App 18.

The management App 18 transmits target print data to the second printer, which is a printer that performs printing, in response to a control-data-based request from the second printer. This transmission is executed via the communication unit 13. Here, the second printer is a printer that functions as a child printer and can refer to the printer B (32) or the printer C (33). The request described above may be a request based on the control data and may be a request that enables access to the target print data.

In this way, the management App 18 manages the received print data and control data. When receiving the request described above from the second printer, the management App 18 may refer to the managed control data and transmit the target print data indicated by the request described above to the second printer. To respond to such a request, the management App 18 can be resident, that is, can be kept in an activated state.

In the example described above, it is assumed that only the printer A (31) among the printers included in the print system 100 is registered in the terminal device 10. However, either one or both of the printer B (32) and the printer C (33) may be registered in the terminal device 10 as a printer that performs printing. Accordingly, it can be said that the print control program described above can be a program for enabling printing from a printer other than a printer that to which the print instruction is issued in the terminal device 10 while cooperating with the management App 18.

The print control program according to the embodiment has been mainly described above, and in other words, the embodiment can provide a printed matter production method that includes the acquisition processing, the first transmission processing, and the second transmission processing described above to produce a printed matter.

In other words, the print system 100 includes the computer exemplified by the terminal device 10, the first printer coupled to the computer and exemplified by the printer A (31), and the second printer that is a printer that performs printing. The second printer is exemplified by the printer B (32) or the printer C (33). The computer includes the general-purpose printer driver 16 and the following acquisition processing unit, first transmission processing unit, management unit, and second transmission processing unit.

The acquisition processing unit acquires the print data from the general-purpose printer driver 16. When the acquisition processing unit acquires the print data, the first transmission processing unit transmits the control data to the first printer exemplified by the printer A (31). The second transmission processing unit transmits the print data acquired by the acquisition processing unit to the management unit. The management unit transmits the target print data to the second printer exemplified by the printer B (32) or the printer C (33) in response to the control-data-based request from the second printer.

### Flow of Print Processing in Print System 100

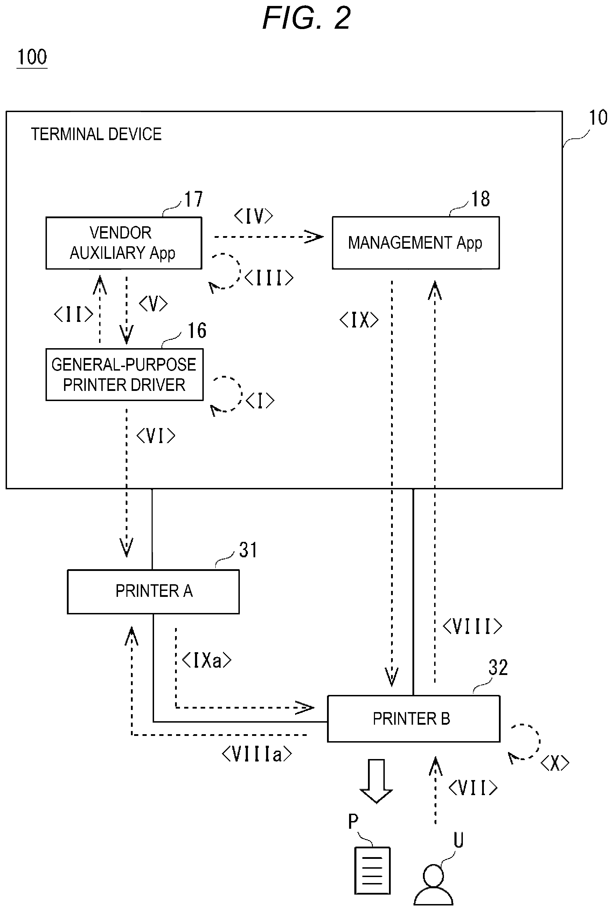

Subsequently, a flow of the print processing in the print system 100 is schematically described with reference to FIG. 2. FIG. 2 is a schematic diagram schematically illustrating the flow of the print processing in the print system 100 of FIG. 1. In FIG. 2, main components among the components illustrated in FIG. 1 are extracted and are also illustrated in the flow of the print processing.

In the following example, the description is made on an assumption that only the printer A (31) among the printers included in the print system 100 is registered in the terminal device 10. In the following, an example is described in which the user causes the printer B (32) to perform printing, and the printer C (33) can similarly perform printing.

First, a user U logs in the terminal device 10 with the user ID and the password allocated to the user U. Next, the user U starts, on the terminal device 10, an application program for starting and editing a print target file, such as a document file. Although not illustrated, the application program can be stored in the storage unit 12 to be executable by the control unit 11. Then, when the user U performs an operation for selecting the printer A (31) in a print setting of the print target file by the operation unit 14, the general-purpose printer driver 16 receives an instruction to start printing in the printer A (31). Here, a basic print setting operation other than such a selection operation can be received as a print setting operation. The user U can instruct the general-purpose printer driver 16 to start printing by selecting the print target file and performing a printing operation instead of activating the application program.

The general-purpose printer driver 16 converts the print target file into print data that is data in a printable format based on a print setting indicated by the received basic print setting operation (processing I). Then, the general-purpose printer driver 16 activates the vendor auxiliary App 17 to transmit the print data to the vendor auxiliary App 17 via inter-process communication, and the vendor auxiliary App 17 acquires the print data (processing II). The acquisition processing described above can be executed in this way.

The processing I and II may be the following processing. That is, the user U can instruct a detailed print setting using extension functions in the vendor auxiliary App 17 as a print setting for the printer A (31), and convert the print target file into the print data based on the detailed print setting. Specifically, when receiving, from the user U, an operation to proceed to the detailed print setting in the basic print setting, the general-purpose printer driver 16 activates the vendor auxiliary App 17. Then, the vendor auxiliary App 17 may receive an operation of the detailed print setting from the user U and convert the print target file into the print data based on the detailed print setting.

Next, the vendor auxiliary App 17 receives, from the user U, a print setting operation for executing the accumulation processing of accumulating the print data without printing the print data and executes such accumulation processing (processing III and processing IV). A function of performing the accumulation processing can be provided in the vendor auxiliary App 17 as one of the extended functions described above. When receiving the detailed print setting described above from the user U, the vendor auxiliary App 17 may receive a print setting in which the accumulation processing is performed as the detailed print setting or as a part of the detailed print setting.

The accumulation processing is described. The accumulation processing includes preparation processing (processing III) of preparing accumulation target data and the second transmission processing (processing IV) of transmitting the accumulation target data to the management App 18 and accumulating it in the management App 18.

The preparation processing is executed when the vendor auxiliary App 17 receives the print setting operation of performing the accumulation processing. First, the vendor auxiliary App 17 reads the user ID logged in the terminal device 10. The user ID and the password set corresponding thereto are examples of the authentication target information used for performing the authentication printing. For the authentication printing, which is print processing that involves the accumulation processing, a user ID and a password different from those used for logging in to the terminal device 10 may be stored, and in this case, the user ID stored for the authentication printing may be read.

Next, the vendor auxiliary App 17 generates the control data. Here, the control data can be data including the computer specifying information for specifying the terminal device 10 which is a computer of a storage destination of the print data, and the print data specifying information for specifying the print data managed by the management App 18. As described above, the computer of the storage destination of the print data refers to the computer of the accumulation destination of the print data, and refers to a computer installed with the management App 18 that manages the print data. The computer specifying information may be referred to as a terminal ID or a computer ID and includes information enabling specifying of the terminal device 10 from the child printer. Examples of such information include address information such as Internet protocol (IP) address of the terminal device 10. The print data specifying information may be information enabling specifying of one piece of the print data from one or a plurality of pieces of the print data accumulated in the terminal device 10 and may be referred to as a print job ID or a printing ID.

At the time of generating the control data, the vendor auxiliary App 17 may execute processing of including the user ID in the computer specifying information or the print data specifying information, or processing of associating the computer specifying information or the print data specifying information with the user ID. Accordingly, the vendor auxiliary App 17 can associate the user ID with the computer specifying information or the print data specifying information and include the user ID in the control data. However, when the printing based on the print data accumulated in the management App 18 can be performed by all users without being limited to the user U who instructs the printing, the processing of reading the user ID or the processing including the read user ID in the control data may not be executed. In an environment in which the address information of the terminal device 10 can be uniquely specified with respect to the user ID in the child printer, the user ID may be used as the computer specifying information.

Next, the vendor auxiliary App 17 executes, as the second transmission processing, processing of transmitting the control data and the print data to the management App 18 via inter-process communication and accumulates the control data and the print data which are received by the management App 18. The accumulation destination may be the storage unit 12. The management App 18 performs printing management on the control data and the print data.

Subsequent to the accumulation processing as described above, the vendor auxiliary App 17 transmits the control data and the print data to the general-purpose printer driver 16 via inter-process communication (processing V). Of course, the processing V may be executed before the transmission in the processing IV or at the same timing as the transmission in the processing IV. The general-purpose printer driver 16 transmits the control data and the print data received in the processing V to the printer A (31) (processing VI). The processing V and the processing VI are examples of the first transmission processing described above. Accordingly, only the control data may be transmitted in the processing VI.

The printer A (31) functions as a parent printer, and accumulates the received control data and print data to be accessible from the printer B (32) and the printer C (33) which function as child printers. That is, the printer A (31) accumulates the received control data and print data in a state of being shared with the printer B (32) and the printer C (33). Alternatively, the printer A (31) may transmit the received control data of the received control data and print data to the printer B (32) and the printer C (33) at the time of reception.

According to the processing described above, the user U can go to a provision location of the printer that performs printing and perform the authentication printing. The user U inputs the user ID and the password by operating the printer B (32), and for example, executes the user authentication processing by comparing with the user ID and the password stored in the printer B (32) that receives the input (processing VII). When the authentication fails in the user authentication processing, the printer B (32) may display an error. The stored user ID and password may be, for example, a user ID and a password stored in the printer A (31) to be shared with child printers including the printer B (32).

On the other hand, when the authentication is successful in the user authentication processing, the printer B (32) refers to the control data shared by the printer A (31) or received from the printer A (31) with the successful user ID as a key. The reference of the control data shared by the printer A (31) can mean that the printer B (32) requests the control data from the printer A (31) with the user ID as a key.

Then, the printer B (32) accesses the management App 18 of the terminal device 10 and specifies the print data based on the computer specifying information and the print data specifying information corresponding to the user ID described above included in the referred control data.

Alternatively, the printer B (32) accesses the management App 18 of the terminal device 10 and obtains a list of the managed print data based on the computer specifying information corresponding to the user ID described above included in the referred control data. Next, the printer B (32) causes the user U to select the target print data from the list.

Next, the printer B (32) requests the management App 18 to transmit the print data for the specified print data or the print data selected by the user U (processing VIII).

The management App 18 transmits the target print data to the printer B (32) in response to the control-data-based request from the printer B (32) that performs printing (processing IX). This transmission is executed via the communication unit 13. By the processing IX, the printer B (32) can acquire the target print data from the management App 18.

In this way, the printer B (32) may acquire the print data specified by the print data specifying information. Alternatively, the printer B (32) may acquire the print data selected from the print data managed by the management App 18. In this case, the printer B (32) makes a list transmission request using the computer specifying information included in the control data, and the management App 18 transmits a list of all print data according to the request and then transmits the selected print data. The printer B (32) may acquire all of the print data managed by the management App 18. In this case, the printer B (32) makes a transmission request of all of the print data using the computer specifying information included in the control data, and the management App 18 may transmit all of the print data according to the request.

Then, the printer B (32) performs the printing based on the acquired print data (processing X). A printed matter P is produced by this printing. The print data in which the printing is performed may be deleted at an execution time or after a predetermined period elapses from the execution time.

When the print data cannot be acquired from the processing VIII and the processing IX, the following processing VIIIa and processing IXa may be executed. In the processing VIIIa, the printer B (32) accesses the printer A (31), which is a sharing source, based on the referred control data, obtains a list of print data, and causes the user U to select the target print data. Alternatively, the printer B (32) specifies the print data based on the print data specifying information corresponding to the user ID described above included in the control data. Then, the printer B (32) requests the printer A (31) to transmit the print data for the print data which is specified or selected by the user U. In the processing IXa, the printer A (31) transmits the target print data to the printer B (32) in response to a control-data-used request from the printer B (32). The printer B (32) can acquire the target print data from the printer A (31) by the processing IXa. Then, the printer B (32) performs printing based on the acquired print data.

The description has been made on an assumption that an instruction user who performs an operation of the print instruction on the terminal device 10 is the user U. However, the instruction user may be different from the user U who receives the printed matter P after the user authentication in the processing VI. That is, the instruction user who operates the terminal device 10 to make the print instruction can perform the operation of the print instruction, for example, such that a predetermined user group or a predetermined user receives the printed matter P.

### Specific Example of Print Processing

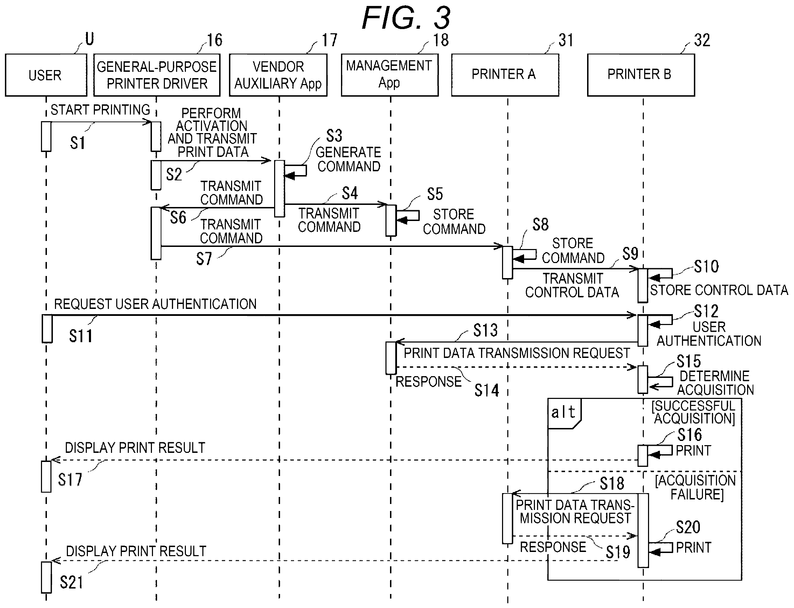

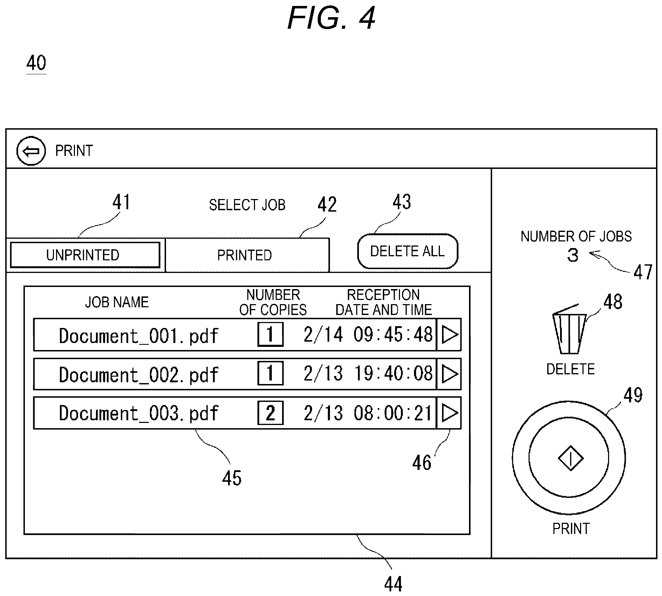

A specific example of the print processing is described with reference to FIGS. 3 and 4. FIG. 3 is a sequence diagram illustrating a specific example of the print processing in the print system 100 of FIG. 1. FIG. 4 is a diagram illustrating an example of a UI image displayed by a printer that performs printing in the print processing of FIG. 3. In the following specific example, characteristic parts of the print processing are mainly described based on the same assumption as the processing example of FIG. 2, and the various application examples described as the processing example of FIG. 2 can also be applied.

First, when the user U performs the operation for selecting the printer A (31) in the print setting of the print target file by the operation unit 14, the general-purpose printer driver 16 receives the instruction to start printing for the printer A (31) (step S1). Here, a basic print setting operation other than such a selection operation can be received as a print setting operation.

As described in the processing I and II, the general-purpose printer driver 16 converts the print target file into the print data which is data in a printable format based on the print setting indicated by the received basic print setting operation and activates the vendor auxiliary App 17 (step S2). In step S2, the general-purpose printer driver 16 activates the vendor auxiliary App 17 and transmits the print data to the vendor auxiliary App 17 via inter-process communication, and the vendor auxiliary App 17 acquires the print data.

Next, the vendor auxiliary App 17 receives, from the user U, the print setting operation for executing the accumulation processing on the print data and executes the accumulation processing including the preparation processing and the second transmission processing. In the preparation processing, first, the vendor auxiliary App 17 generates the control data (step S3). This processing corresponds to the processing III. The control data can be generated, for example, as a command for executing the authentication print including the accumulation processing.

The command can include the computer specifying information such as an IP address of the terminal device 10, the print data specifying information such as the print job ID for specifying the print data in the management App 18, and the user ID in addition to an instruction to execute the authentication print. Therefore, when the command is generated, the vendor auxiliary App 17 also reads the user ID and the computer specifying information and sets the print data specifying information for the print data. The print data specifying information may be set according to a predetermined rule, for example, based on date and time, generation order, or the like. As described above, the print data and the control data can be generated as separate commands associated with each other or as a one combined command. In the following, the description is made on an assumption that one combined command including the print data and the control data is generated in step S3. In this command, a portion corresponding to the print data and a portion corresponding to the control data are described in a distinguishable format.

For example, the command can be written in, for example, ESC/P, but is not limited thereto and may be written in other printer control languages, such as PostScript. ESC/P is an abbreviation for Epson standard code for printers. Of course, ESC/P has various variations, and any of the various variations may be used.

In the management App 18 or in the management App 18 and the printer A (31) which is a parent printer, a correctness and incorrectness determination character string may be added to a generation command which is a generated command as a security measure for preventing an illegal command from being accepted. For example, the correctness and incorrectness determination character string may be any character string such as "EP". Accordingly, a command finally generated is, for example, an EP <generation command> EP. In the management App 18 or in the management App 18 and the printer A (31) which is a parent printer, it is determined whether a command is a formal command by the correctness and incorrectness determination character string, and the command can be ignored or discarded when the command is not a formal command.

Next, as the second transmission processing, the vendor auxiliary App 17 executes processing of transmitting the finally generated command, which includes the print data, to the management App 18 via inter-process communication (step S4). The management App 18 stores the received command in the storage unit 12, thereby accumulating the control data and the print data (step S5).

For example, in step S3, the vendor auxiliary App 17 may store the generated command in the storage unit 12. Then, the vendor auxiliary App 17 may transmit a storage destination of the generated command in step S4 to the management App 18 to share the command with the management App 18, thereby accumulating the control data and the print data. When the command is generated to include the correctness and incorrectness determination character string, the management App 18 compares a correctness and incorrectness determination character string stored in advance with the correctness and incorrectness determination character string included in the command, thereby accumulating the command only when they match. When the command is accumulating in a shared manner, the management App 18 may accept the sharing only when they match.

After the processing of step S4, the vendor auxiliary App 17 transmits the command to the general-purpose printer driver 16 through inter-process communication (step S6). This processing corresponds to the processing V. Step S6 may be executed after step S3 and before step S4, may be executed at the same timing as step S4, or may be executed after step S5.

The general-purpose printer driver 16 transmits the command received in step S6 to the printer A (31) (step S7). This processing corresponds to the processing VI. In step S7, the received command is transmitted to the printer A (31) using, for example, a standard of the IPP octet-stream that allows free transmission of binary data. The command transmitted using octet-stream may be only a command corresponding to the computer specifying information, the print data specifying information, and the user ID in the control data, and other commands may be transmitted via IPP communication. In this way, in the first transmission processing, the command may be transmitted using the octet-stream to the printer A (31) that functions as a parent printer. As described in the processing VI, in step S7, only a command corresponding to the control data, or only a command corresponding to the computer specifying information, the print data specifying information, and the user ID in the control data may be transmitted, and a command corresponding to the print data may not be transmitted.

As described in steps S6 and S7, in the first transmission processing, the command may be transmitted via the general-purpose printer driver 16 to the printer A (31) that functions as a parent printer. However, the first transmission processing may be processing of performing transmission without using the general-purpose printer driver 16. That is, the vendor auxiliary App 17 may directly transmit the command to the printer A (31) that functions as a parent printer.

Subsequent to step S7, the printer A (31) stores the received command to be accessible from the printer B (32) and printer C (33) that function as child printers (step S8). That is, the printer A (31) accumulates the received commands in a state of being shared with the printer B (32) and the printer C (33). At the time of accumulating the command, the printer A (31) transmits the command corresponding to the control data or the command corresponding to the computer specifying information, the print data specifying information, and the user ID in the control data to the printer B (32) to proactively perform sharing (step S9). The printer B (32) stores the received command in an internal storage unit (step S10). Although not illustrated, the printer A (31) similarly transmits this command to the printer C (33), and the printer C (33) receives the command and stores the command in an internal storage unit. Alternatively, the printer B (32) and the printer C (33) can request and acquire the command from the printer A (31) by periodically making an inquiry, and store the command therein. Alternatively, in response to successful authentication in the user authentication processing in step S12 to be described later, the printer B (32) that performs the user authentication processing may request and acquire the command from the printer A (31).

Next, the user U operates the printer B (32) that performs printing to input the user ID and the password, and requests the user authentication (step S11). This processing corresponds to the processing VII. Upon receiving the request, the printer B (32) executes the user authentication processing by comparing the user ID and the password included in the request with the user ID and the password stored therein (step S12). Although not illustrated, the printer B (32) may display an error when the authentication fails in the user authentication processing.

When the authentication is successful in the user authentication processing, the printer B (32) refers, using the succeeded user ID as a key, to the computer specifying information, the print data specifying information, and the user ID in the command shared by the printer A (31) or the command received from the printer A (31). This reference can mean that the printer B (32) requests the computer specifying information and the print data specifying information using the user ID as a key from the printer A (31), that is, inquires of the computer specifying information and the print data specifying information. Then, the printer B (32) accesses the management App 18 of the terminal device 10 and specifies the print data based on the computer specifying information and the print data specifying information acquired by the inquiry.

Alternatively, the printer B (32) accesses the management App 18 and obtains a list of print data based on the referred computer specifying information and the print data specifying information, and causes the user U to select the target print data. The printer B (32) can display, for example, a UI image 40 illustrated in FIG. 4 on the operation panel and receive, from the user U, an operation of selecting the target print data. The UI image 40 may include an unprinted tab 41, a printed tab 42, a delete all button 43, a list 44, job number information 47, a delete button 48, and a print execution button 49. The unprinted tab 41 and the printed tab 42 are tabs for displaying the list 44 of print jobs that are not printed and a list of print jobs that are printed, respectively. In the list 44, job information 45 such as a job name, the number of copies, and a reception date and time, and a detail button 46 for displaying details of the print job are displayed for each print job. In the list 44, each of the print jobs can be selected by the user U. Here, a print target file name is used as the job name. The delete all button 43 is a button for performing processing of deleting all print jobs included in the displayed list 44. The job number information 47 includes a number indicating the number of print jobs included in the list 44 under the unprinted tab 41, and includes a number indicating the number of print jobs included in a list under the printed tag 42 when the printed tab 42 is selected. The delete button 48 is a button for performing processing of deleting one or a plurality of selected print jobs. The print execution button 49 is a button for performing processing of executing one or a plurality of selected print jobs.

For example, the user U displays the list 44 on the UI image 40, selects one or a plurality of print jobs, and selects the print execution button 49. When receiving such an operation, the printer B (32) receives, from the user U, an operation of selecting the print data for one or a plurality of print jobs selected at that time.

Then, the printer B (32) makes a transmission request of the print data, that is, a transmission request of the command indicating the print data, to the management App 18 for the specified print data or the print data selected by the user U (step S13). When the transmission request is a request including the print data specifying information for the target print data, the management App 18 can specify the target print data. The processing of step S13 corresponds to the processing VIII.

As described above, the printer B (32) requests the management App 18 to transmit a command indicating the print data. However, in a stage in which the printer B (32) does not receive a command indicating at least the computer specifying information in the control data from the printer A (31), the following problem may occur. That is, in such a stage, the printer B (32) cannot determine which of the printer A (31) and the printer C (33) is a parent printer which is a printer to which the print instruction is issued. Accordingly, the printer B (32) may make an inquiry about the computer specifying information to at least all the printers that can be recognized in the print system 100 until the computer specifying information corresponding to the user ID can be acquired. Alternatively, the printer B (32) may make an inquiry about the computer specifying information to all the printers described above regardless of whether the computer specifying information can be acquired. Since the printer B (32) may be a parent printer of the user ID before the inquiry, the printer B (32) can also be included in all the printers described above. The printer B (32) among all the printers can first confirm a command received by the printer B (32) from a terminal device such as the terminal device 10.

The management App 18 responds to the transmission request of the print data based on the control data from the printer B (32) that performs printing as described above (step S14).

For this response, the management App 18 generates a command obtained by removing the correctness and incorrectness determination character string from the command received from the vendor auxiliary App 17 in step S4 and stored in step S5. Then, the management App 18 transmits, as a response in step S14, the command from which the correctness and incorrectness determination character string is removed, which is generated in this way, to the printer B (32) that is a printer that issues the transmission request of the command indicating the print data. Response processing when the management App 18 transmits a command indicating the target print data to the printer B (32) in this way as a response in step S14 corresponds to the processing IX.

The printer B (32) that transmits the transmission request in step S13 determines whether the command indicating the target print data is acquired in the response (step S15).

When it is determined that the command can be acquired, the printer B (32) performs printing based on the command (step S16), and notifies the user U of a print result by displaying the print result on the operation panel (step S17). The processing of step S16 corresponds to the processing X.

When it is determined that the command cannot be acquired, that is, when it is determined that the acquisition of the command indicating the print data fails, the printer B (32) transmits a transmission request for the target print data to the printer A (31) (step S18). Even in the case of this transmission request, if it is a request including the print data specifying information for the target print data, the target print data can be specified by the printer A (31). The processing of step S18 corresponds to the processing Villa.

When there is no response in step S14 or if there is a response but the response indicates that there is no command indicating the target print data, the printer B (32) determines that the acquisition of the command fails. Examples of the case in which there is no response in step S14 include a case in which the management App 18 cannot receive the transmission request due to a communication failure or a case in which the target print data cannot be transmitted to the printer B (32) even if the management App 18 can receive the transmission request.

The printer A (31) that receives the transmission request in step S18 transmits the command indicating the print data corresponding to the print data specifying information included in the transmission request to the printer B (32) as a response to the transmission request (step S19). The processing of step S19 corresponds to the processing IXa. Then, the printer B (32) performs printing based on the acquired command indicating the print data (step S20). The processing of step S20 also corresponds to the processing X. Next, the printer B (32) notifies the user U of the print result by displaying the print result on the operation panel (step S21).

The printer B (32) that transmits the transmission request in step S18 may determine whether a command indicating the target print data can be acquired in the response from the printer A (31), and may display an error notification on the operation panel when the command cannot be acquired. The printer B (32) may perform printing in step S20 when the command can be acquired.

The command transmitted in step S6 may be only a command indicating the control data. However, in this case, the processing of steps S18 to S21 cannot be applied, and the printer B (32) may notify of an error on the operation panel when the command indicating the print data cannot be acquired from the management App 18. In this way, the first transmission processing described above may be processing of not transmitting the print data to the printer A (31) as the first printer. Also in this example, a command indicating the print data is transmitted from the management App 18 to the printer A (31) that functions as the second printer. That is, in this example, this command is not directly transmitted from the vendor auxiliary App 17 to the printer A (31) that functions as the second printer.

As described in steps S4, S13, and S14, the second transmission processing described above may be processing of not directly transmitting the print data to the printer B (32) which is the second printer. On the other hand, for example, when the function of the management App 18 is embedded in the vendor auxiliary App 17, the print data can be directly transmitted to the second printer in the second transmission processing.

### Effects of Embodiment

As described above, in the print system 100, the vendor auxiliary App 17 is provided in an environment in which the print processing is performed using the general-purpose printer driver 16 such as an OS standard printer driver. The vendor auxiliary App 17 has a vendor-specific function of causing a printer other than the printer specified by the terminal device 10 to perform printing as a function not supported by the general-purpose printer driver 16. To implement such a function, the vendor auxiliary App 17 applies the control data as vendor-specific information to a command for printing that is transmitted from the general-purpose printer driver 16. Then, the vendor auxiliary App 17 transmits such a command changed due to the application of the control data to the management App 18, thereby sharing the command with the management App 18. Since the vendor auxiliary App 17 shares the command with the management App 18, in response to a transmission request of the print data based on the control data from the child printer, the management App 18 can transmit a command indicating the print data to the child printer. In this way, the vendor auxiliary App 17 can transmit commands to ports other than ports specified by the general-purpose printer driver 16, such as a port other than an IPP port of the parent printer specified by an IPP class driver.

Accordingly, according to the embodiment, in an environment in which the general-purpose printer driver 16 is installed in the terminal device 10, a printer other than a printer specified by the terminal device 10 can perform printing. That is, according to the embodiment, the environment in which the general-purpose printer driver 16 is installed can be made compatible with the processing of performing printing from the printer other than the printer specified by the terminal device 10.

To supplement such effects, the embodiment is compared with print systems according to Comparative Examples 1 and 2. The print system according to Comparative Example 1 is a system that performs print processing using a general-purpose printer driver such as an IPP class driver. However, a terminal device according to Comparative Example 1 does not include the print control program described above according to the embodiment. The print system according to Comparative Example 1, is in an environment in which the print processing is performed using the general-purpose printer driver. Accordingly, in the print system according to Comparative Example 1, the IPP class driver cannot transmit a command to a port other than the IPP port of the parent printer specified by the IPP class driver, and cannot transmit a command indicating print data to the child printer. The same applies to other general-purpose printer drivers. Accordingly, in the print system according to Comparative Example 1, a configuration in which the child printer acquires the command indicating the print data from the parent printer or a configuration in which a separate print server is introduced is employed. In the configuration in which the parent printer transmits the command indicating the print data to the child printer, a processing load is applied to the parent printer. In the configuration in which a separate print server is introduced, an operation cost of the print server is increased. Furthermore, in the configuration in which a separate print server is introduced, in an environment in which print processing is performed using a general-purpose printer driver, it is not possible to simply introduce a print server assumed to perform processing differently depending on the printer vendor. Accordingly, in such a configuration, the introduction of the print server needs to be assisted by different vendor auxiliary Apps for each printer vendor.

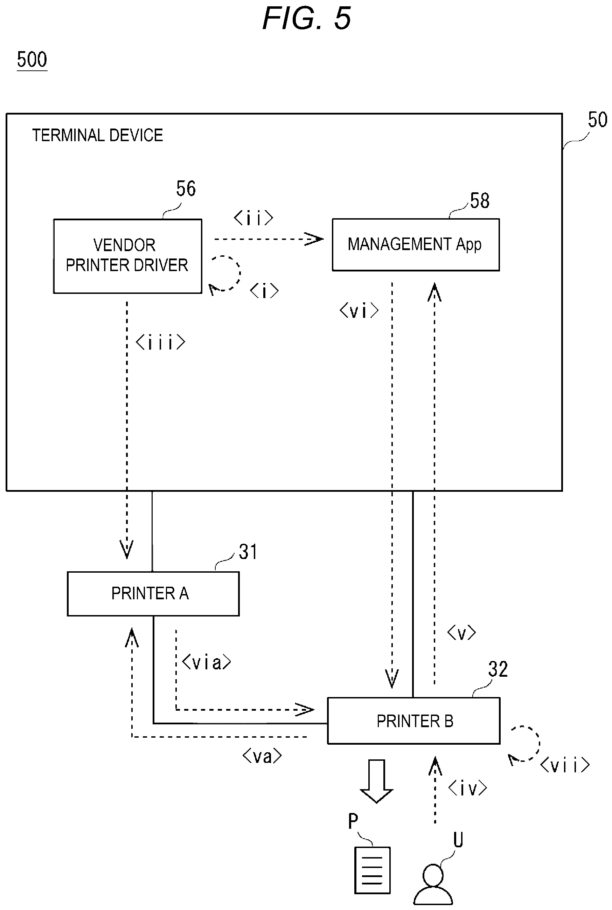

The print system according to Comparative Example 2 is a system that performs print processing using a printer driver specific to a vendor of a printer, not a general-purpose printer driver such as an IPP Class driver incorporated as a standard in an OS. FIG. 5 is a schematic diagram schematically illustrating a flow of the print processing in the print system according to Comparative Example 2.

As illustrated in FIG. 5, a print system 500 according to Comparative Example 2 includes a terminal device 50, the printer A (31), and the printer B (32). The terminal device 50 does not include the general-purpose printer driver 16 and the vendor auxiliary App 17 and includes a vendor printer driver 56. The terminal device 50 includes a management App 58 instead of the management App 18. The management App 58 is a management program corresponding to the vendor printer driver 56 in the management App 18.

The vendor printer driver 56 enables an inquiry to the terminal device 50 from the printer B (32) that functions as a child printer by applying computer specifying information such as an IP address of the terminal device 50 to a command for printing. The vendor printer driver 56 performs inter-process communication with the management App 58, and shares the command with the management App 58. When there is an inquiry from the printer B (32) that functions as a child printer, the vendor printer driver 56 responses to the inquiry and transmits a command indicating the print data to the printer B (32).

According to such a configuration, the print system 500 can perform the following processing. First, the user U logs in to the terminal device 50 with the user ID and the password allocated to the user U, selects the printer A (31) in the print setting of the print target file, and performs a print setting operation of executing the accumulation processing. The vendor printer driver 56 receives the operation as an instruction to start printing to the printer A (31), converts the print target file into print data that is data in a printable format, and performs the preparation processing (processing i). The preparation processing is the processing described as the processing of the vendor auxiliary App 17 in FIG. 2. Next, the vendor printer driver 56 transmits a command indicating the control data and the print data to the management App 58 and accumulates the command in the management App 58 (processing ii), and transmits the command to the printer A (31) and accumulates the command in the printer A (31) (processing iii).

The user U inputs the user ID and the password by operating the printer B (32), and executes the user authentication processing by comparing with the user ID and the password stored in the printer B (32) that receives the input (processing iv). When the authentication is successful in the user authentication processing, the printer B (32) refers to a command indicating the control data, which is shared by the printer A (31) in advance or received from the printer A (31) with the successful user ID as a key. The printer B (32) accesses the management App 58 of the terminal device 50 and specifies the print data based on the computer specifying information and the print data specifying information corresponding to the user ID described above. Next, the printer B (32) requests the management App 58 to transmit a command indicating the print data for the specified print data (processing v). According to the request from the printer B (32), the management App 58 transmits a command indicating the target print data to the printer B (32) (processing vi). Then, the printer B (32) performs printing based on the acquired command indicating the print data (processing vii). The printed matter P is produced by this printing.

When the command indicating the print data cannot be acquired in the processing v and the processing vi, the next processing va and the processing via may be executed. In the processing va, the printer B (32) specifies the print data based on the print data specifying information corresponding to the user ID described above included in the control data, and requests the printer A (31) to transmit the command indicating the print data for the specified print data. In the processing via, the printer A (31) transmits a command indicating the target print data to the printer B (32) in response to a request from the printer B (32). Then, the printer B (32) performs printing based on the acquired command indicating the print data (processing vii).

As described above, in the embodiment, the child printer acquires print data from the terminal device 10. Accordingly, in the embodiment, as compared with a configuration in Comparative Example 1 in which the child printer acquires the command indicating the print data from the parent printer, the processing load of the parent printer can be reduced, and the print processing from the child printer desired by the user can be accelerated.

In the embodiment, there is no need to separately introduce a print server. Accordingly, as compared with a configuration in which a print server is separately introduced Comparative Example 1, not only the operation cost of the print server is low, but there is also no need for support from vendor auxiliary Apps that differ for each printer vendor.

In the embodiment, unlike Comparative Example 2, in an environment in which the general-purpose printer driver is installed in the terminal device, a printer other than a printer specified by the terminal device can perform printing.

### Other Modifications

The present disclosure is not limited to the embodiment described above and can be changed as appropriate without departing from the gist of the present disclosure. For example, the system configuration of the print system, the configurations of the devices implementing the system, the configurations of the programs included in each device, the processing procedures of each device, and the like are not limited to the exemplified ones. For example, in the print system 100 illustrated in FIG. 1, a network coupling the terminal device 10 and the printer A (31) may be different from a network connecting the printer A (31), the printer B (32), and the printer C (33). Even in this case, if the printer B (32) and the printer C (33) can be connected to the terminal device 10 via another network, the print data can be acquired from the terminal device 10.

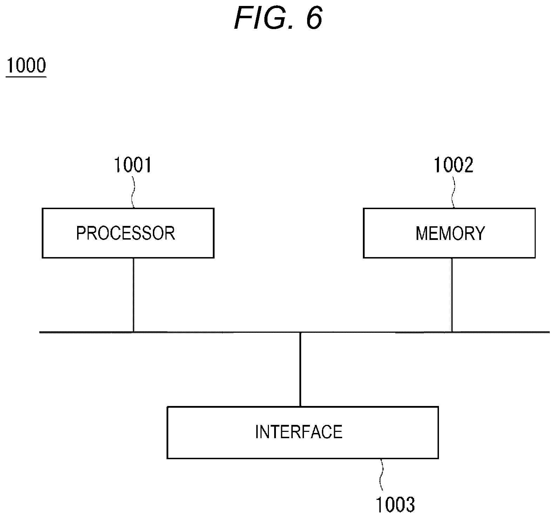

Each device included in the print system according to the embodiment described above may have, for example, the following hardware configuration. Here, each device include the terminal device and the printers in the example illustrated in FIG. 1. FIG. 6 is a diagram illustrating an example of a hardware configuration of a device.

A device 1000 illustrated in FIG. 6 can include a processor 1001, a memory 1002, and an interface 1003. The interface 1003 can include, for example, a communication interface or an interface with an input and output device, which are necessary depending on the device.

The processor 1001 may be, for example, a CPU, a GPU, or a microprocessor unit (MPU) also referred to as a microprocessor. The processor 1001 may include a plurality of processors. The memory 1002 is implemented by, for example, a combination of a volatile memory and a nonvolatile memory. Functions of each device are implemented by the processor 1001 reading a program stored in the memory 1002 and executing the program while exchanging necessary information via the interface 1003.

The program described above includes an instruction group (or software codes) for causing a computer to perform one or more functions described in the embodiment when the program is read in the computer. The program may be stored in a non-transitory computer-readable medium or a tangible storage medium. Not as a limitation but as an example, the computer-readable medium or the tangible storage medium includes a random-access memory (RAM), a read-only memory (ROM), a flash memory, a solid-state drive (SSD), or another memory technology. Not as a limitation but as an example, the computer-readable medium or the tangible storage medium includes a CD-ROM, a digital versatile disc (DVD), a Blu-ray (registered trademark) disk, or another optical disc storage, a magnetic cassette, a magnetic tape, a magnetic disk storage, or another magnetic storage device. The program may be transmitted on a transitory computer-readable medium or a communication medium. Not as a limitation but as an example, the transitory computer-readable medium or the communication medium include a propagation signal of an electric, optical, acoustic, or another form. The program is included in a program product.

The present disclosure is described with reference to the embodiment described above. The present disclosure is not limited only to the configuration in the embodiment described above, and it goes without saying that the present disclosure includes various variations, modifications, and combinations that can be achieved by those skilled in the art within the scope of the disclosure in the claims of the present application. For example, the invention of the printed matter production method can be interpreted as the present disclosure of a print method.

## Claims

1. A non-transitory computer-readable storage medium storing a print control program,
the print control program causing a computer to execute:
acquisition processing of acquiring print data from a general-purpose printer driver;
first transmission processing of transmitting control data to a first printer when the print data is acquired in the acquisition processing; and
second transmission processing of transmitting the print data to a management program for transmitting the print data to a second printer in response to a control-data-based request from the second printer to cause the second printer to perform printing.

2. The non-transitory computer-readable storage medium storing the print control program according to claim 1, wherein
the print control program is a print support application.

3. The non-transitory computer-readable storage medium storing the print control program according to claim 1, wherein
the control data is data including computer specifying information for specifying the computer and print data specifying information for specifying the print data managed by the management program.

4. The non-transitory computer-readable storage medium storing the print control program according to claim 1, wherein
in the first transmission processing, the control data is transmitted to the first printer in an octet-stream.

5. The non-transitory computer-readable storage medium storing the print control program according to claim 1, wherein
in the first transmission processing, the control data is transmitted to the first printer via the general-purpose printer driver.

6. The non-transitory computer-readable storage medium storing the print control program according to claim 1, wherein
the first transmission processing is processing of not transmitting the print data to the first printer.

7. The non-transitory computer-readable storage medium storing the print control program according to claim 1, wherein
the second transmission processing is processing of not directly transmitting the print data from the print control program to the second printer.

8. A print system comprising:
a computer;
a first printer; and
a second printer, wherein
the computer includes
a general-purpose printer driver,
an acquisition processing unit configured to acquire print data from the general-purpose printer driver,
a first transmission processing unit configured to transmit control data to the first printer when the print data is acquired by the acquisition processing unit,
a management unit configured to transmit, in response to a control-data-based request from a second printer, the print data to the second printer to cause the second printer to perform printing, and
a second transmission processing unit configured to transmit the print data acquired by the acquisition processing unit to the management unit.

9. A printed matter production method comprising:
acquisition processing of acquiring, by a print control program, print data from a general-purpose printer driver;
first transmission processing of transmitting, by the print control program, control data to a first printer;
second transmission processing of transmitting, by the print control program, the print data to a management program; and
print processing of transmitting, by the management program, the print data to a second printer in response to a control-data-based request from the second printer to cause the second printer to produce a printed matter.
